# EUROPÄISCHE PATENTSCHRIFT

(11) **EP 3 583 428 B1**
(45) Veröffentlichungstag und Bekanntmachung des Hinweises auf die Patenterteilung: **06.10.2021**
(21) Anmeldenummer: 18709271.3
(22) Anmeldetag: 14.02.2018
(51) Int. Cl.: G01P 15/093, G01P 15/18, G01H 9/00, G01D 5/26, G01D 5/34

(54) **FASEROPTISCHER SCHWINGUNGS- UND BESCHLEUNIGUNGSSENSOR**
FIBER-OPTIC VIBRATION AND ACCELERATION SENSOR
CAPTEURS DE VIBRATIONS ET D'ACCÉLÉRATIONS À FIBRE OPTIQUE

(30) Priorität: 15.02.2017 DE 102017202396
(43) Veröffentlichungstag der Anmeldung: 25.12.2019
(73) Patentinhaber: Weidmann Holding AG, 8640 Rapperswil (CH)
(72) Erfinder: RENSCHEN, Claus, 01309 Dresden (DE)
(74) Vertreter: Kailuweit & Uhlemann Patentanwälte Partnerschaft mbB
(86) Internationale Anmeldenummer: PCT/EP2018/053642
(87) Internationale Veröffentlichungsnummer: WO 2018/149859

(56) Entgegenhaltungen:
- EP-A1- 0 005 798
- EP-A2- 0 151 958
- DE-A1- 3 320 894
- DE-A1- 19 514 852
- US-A1- 2007 247 613
- MARTY J ET AL: "Fibre-optic accelerometer using silicon micromachining techniques", SENSORS AND ACTUATORS A: PHYS, ELSEVIER BV, NL, Bd. 47, Nr. 1-3, 1. März 1995 (1995-03-01) , Seiten 470-473, XP004310524, ISSN: 0924-4247, DOI: 10.1016/0924-4247(94)00943-C

## Beschreibung

Die Erfindung betrifft faseroptische Schwingungs- und Beschleunigungssensoren mit einem dielektrischen Spiegel und einer ersten mit einem Koppler verbundenen lichtführenden Faser, wobei der Koppler weiterhin über zweite lichtführende Fasern mit einer Lichtquelle und einem aus einfallenden Licht eine Spannung generierenden Detektor verbunden sind.

Ein faseroptischer Schwingungsaufnehmer ist unter anderem durch die Druckschrift DE 198 01 959 A1 als optischer Aufbau zur berührungslosen Schwingungsmessung bekannt. Die Schwingungsmessung erfolgt mittels eines Laserinterferometers mit mindestens einem Messstrahl und mindestens einem Referenzstrahl. Die Vorrichtung muss ein Mittel zum Erzeugen einer Frequenzverschiebung aufweisen.

Durch die Druckschrift DE 10 2013 105 483 A1 ist ein Schwingungsaufnehmer, ein Schwingungsmessarray, ein Chemiesensor sowie eine Vorrichtung, welche diese aufweist offenbart. Der Schwingungsaufnehmer weist ein erstes Resonanzelement und ein erstes Interferometer mit einem ersten Messweg und einem ersten Referenzweg auf. Dabei sind der erste Messweg durch einen ersten Messlichtwellenleiter und der Referenzweg durch einen ersten Referenzlichtwellenleiter gebildet sind. Dazu werden Membranen verwendet, die abgetastet werden. Derartige Membranen sind aufwändig herzustellen und ihr Frequenzgang ist bei geringen Frequenzen schwierig zu dimensionieren.

Die Druckschrift US 4 414 471 A offenbart einen faseroptischen Sensor mit einer Faser, wobei sich in einer Ausführungsform zwei Lichtwellenleiter gegenüberstehen. Ein Endenbereich befindet sich frei im Raum. Bei einer Beschleunigung bewegt sich insbesondere das Ende gegenüber dem anderen Lichtwellenleiter, so dass sich der Anteil des darauf fallenden Lichtes ändert. Bei einer weiteren Ausführungsform ist beabstandet zum Lichtwellenleiter ein bogenförmig ausgebildeter Spiegel angeordnet, so dass sich bei einer Bewegung des freien Endes des Lichtwellenleiters der Anteil der reflektierten Lichtstrahlen durch die Krümmung ändert.

Die Druckschrift DE 10 2015 201 340 A1 zeigt einen faseroptischen Vibrationssensor, wobei eine optische Faser verwendet wird, die ein freistehendes Ende aufweist, welches durch die Trägheitskräfte auslenkbar ist. Die Faserabschlussfläche am freistehenden Ende steht dicht vor einem schräg gestellten Spiegel. Wird die Glasfaser ausgelenkt, wird je nach Schwingungszustand mehr oder weniger Licht in die Glasfaser zurück reflektiert.

Die Druckschrift DE 195 14 852 A1 offenbart ein Verfahren und eine Anordnung zur Beschleunigungs- und Vibrationsmessung. Eine Lichtleitfaser ist als Monomodefaser ausgebildet. Am Ende der Faser ist ein Reflektor dicht beabstandet angeordnet, um eine Phasenänderung im Messsignal bei Auslenkung des Faserendes hervorzurufen.

Die Druckschrift EP 0 623 808 A2 beinhaltet eine optoelektronische Sensorvorrichtung mit einer Strahlereinheit, welche einen Lichtstrom oder eine Strahlung möglichst gleichmäßiger Dichte aussendet. Die Strahlung kann direkt oder über ein optisches Medium in einen aktiven Messraum fließen. Der Empfänger ist ein optoelektronischer Baustein mit einer aktiven Fläche, der die übertragene Strahlung in ein analoges elektrisches Signal wandelt.

Durch die Druckschrift DE 10 2014 009 214 A1 ist ein faseroptischer Beschleunigungsmesser mit einen Lichtwellenleiter bekannt, der einen Kragabschnitt ausbildet. Beabstandet dazu ist Lichtwellenleiterstummel angeordnet, dessen Ende eine schräge Fläche ist oder einen gestuften Abschnitt besitzt. Das gegenüberliegende Ende des Lichtwellenleiterstummels ist senkrecht zur optischen Achse geschnitten und mit einem hochpolierten effizienten lichtreflektierenden Material beschichtet.

Die Druckschrift US 2010/0 309 474 A1 beinhaltet ein Gyroskop.

Die Druckschriften EP 0 005 798 A1, US 2007/247613 A1 und "Fibre-optic accelerometer using silicon micromachining techniques" von J. Marty u. a. offenbaren weitere faseroptische Beschleunigungssensoren mit lichtführenden Fasern und Spiegeln.

Der im Patentanspruch 1 angegebenen Erfindung liegt die Aufgabe zugrunde, einen faseroptischen Schwingungs- und Beschleunigungssensor mit einer lichtführenden Faser und einem dielektrischen Spiegel einfach zu schaffen.

Diese Aufgabe wird mit den im Patentanspruch 1 aufgeführten Merkmalen gelöst.

Die faseroptischen Schwingungs- und Beschleunigungssensoren mit einem dielektrischen Spiegel und einer ersten mit einem Koppler verbundenen lichtführenden Faser, wobei der Koppler weiterhin über zweite lichtführende Fasern mit einer Lichtquelle und einem aus einfallenden Licht eine Spannung generierenden Detektor verbunden sind, zeichnen sich insbesondere durch ihre einfache Realisierung aus.

Dazu ist ein freier Endenbereich der ersten Faser beabstandet zu dem dielektrischen Spiegel so angeordnet, dass sich eine Kante des dielektrischen Spiegels im austretenden Licht der ersten Faser befindet. Im nicht angeregten Zustand ist die aus dem auf das Ende der ersten Faser einfallenden Lichts generierte Spannung des Detektors kleiner als die Spannung, die bei vollständiger Bedeckung des Aperturkegels der ersten Faser durch den dielektrischen Spiegel und damit maximaler Reflexion mit dem Detektor generiert wird. Diese Spannung ist ein Maß des faseroptischen Schwingungs- und Beschleunigungssensors.

Damit wird eine Faser selbst als schwingungssensibles Element verwendet. Die Resonanzfrequenzen und die Empfindlichkeit des faseroptischen Schwingungs- und Beschleunigungssensor wird durch die Geometrie der Faser bestimmt, die frei wählbar ist. Dazu ist die Faser einseitig eingespannt und gegen einen dielektrischen Spiegel gerichtet. Der Abstand zwischen diesen und insbesondere die Kante des dielektrischen Spiegels bestimmen die Empfindlichkeit und die Richtungsorientierung des faseroptischen Schwingungs- und Beschleunigungssensors.

Die einseitig eingespannte Faser ist dabei ein schwingungsfähiges Gebilde, dessen Resonanzfrequenz durch die Länge, den Durchmesser und den Elastizitätsmodul bestimmt ist. Eine äußere Kraft/Beschleunigung mit einer Frequenz erregt die Faser zu Schwingungen mit dieser Frequenz. Die Amplitude der Schwingung ist in einem Frequenzbereich kleiner als die Resonanzfrequenz relativ konstant und proportional zur Stärke der Erregung. In der Nähe der Resonanzfrequenz steigt diese dann drastisch an.

Der dielektrische Spiegel ist gegenüber dem Faserende angeordnet. Bedeckt der Spiegel vollständig den Aperturkegel der Faser, wird ein maximaler Anteil des Lichtes in die Faser zurück reflektiert und generiert im Detektor eine Spannung. Der dielektrische Spiegel mit der scharfen Kante wird nun so justiert und fixiert, das die generierte Spannung kleiner ist und die Kante des dielektrischen Spiegels senkrecht zum Schwerefeld der Erde orientiert ist.

Wird der faseroptische Schwingungs- und Beschleunigungssensor nun parallel zur Achse der Faser um + oder - 90 Grad gedreht, biegt sich die Faser durch ihr Eigengewicht durch. Damit ändern sich die Koppelverhältnisse zwischen dielektrischem Spiegel und Faser. Die +/-Spannungsdifferenz Delta U entspricht der einfachen Erdanziehung von 9,81 m/s² und gestattet so eine problemlose Eichung.

Wird der faseroptische Schwingungs- und Beschleunigungssensor nun durch mechanische Schwingungen erregt, schwingt die Faser ebenfalls mit dieser Frequenz in Richtung der Anregung. Bewegungen der Faser und deren Ende parallel zur Kante des dielektrischen Spiegels erzeugen keine Änderung der in das Faserende reflektierten Lichtstrahlen.

Bewegungen senkrecht zur Kante des dielektrischen Spiegels führen zu Spannungsänderungen am Detektor proportional zur Erdbeschleunigung. Der Sensor ist richtungsselektiv.

Ein weiterer Vorteil des faseroptischen Schwingungs- und Beschleunigungssensor besteht in seiner Unempfindlichkeit gegen elektromagnetische Felder. Die Faser kann aus Glas oder Kunststoff bestehen.

Vorteilhafte Ausgestaltungen der Erfindung sind in den Patentansprüchen 2 bis 11 angegeben.

Ein erstes Befestigungsmittel für die erste Faser und ein zweites Befestigungsmittel für den dielektrischen Spiegel sind nach der Weiterbildung des Patentanspruchs 2 miteinander verbunden.

In Fortführung ist dazu nach der Weiterbildung des Patentanspruchs 3 das erste Befestigungsmittel eine Hülse in einem Rohrstück. Der dielektrische Spiegel befindet sich an der der Hülse gegenüberliegenden Querschnittsfläche des Rohrstückes, so dass das Rohrstück ein Befestigungsmittel der Hülse und das zweite Befestigungsmittel ist. Das ist ein einfacher und kompakter Aufbau des faseroptischen Schwingungs- und Beschleunigungssensors. Das Rohr kann dazu sowohl einen kreis- als auch einen mehreckigen Querschnitt aufweisen.

Die Faser und der dielektrische Spiegel sind nach der Weiterbildung des Patentanspruchs 4 durch Klebungen und/oder Klemmungen mit den Befestigungsmitteln verbunden. Insbesondere Klemmverbindungen sichern einfache Fixierungen dieser Elemente zueinander.

Nach der Weiterbildung des Patentanspruchs 5 sind die bei vollständiger Bedeckung des Aperturkegels der ersten Faser durch den dielektrischen Spiegel und damit maximaler Reflexion mit dem Detektor generierte Spannung eine erste Spannung und die im nicht angeregten Zustand die aus dem auf das Ende der ersten Faser einfallenden Lichts generierte Spannung des Detektors eine zweite Spannung. Eine Änderung der zweiten Spannung an sich und/oder in Bezug zur ersten Spannung signalisiert eine Schwingung oder Beschleunigung.

Günstigerweise ist in Fortführung nach der Weiterbildung des Patentanspruchs 6 die zweite Spannung 50% der ersten Spannung. Damit ist ein maximaler Bereich der Änderung der zweiten Spannung und damit ein maximaler Messbereich für Schwingungen oder Beschleunigungen gegeben. Die zweite Spannung liegt dabei in der Mitte oder im mittleren Bereich, wobei die Amplitude der Schwingung kleiner als die Resonanzfrequenz und relativ konstant und proportional zur Stärke der Erregung ist.

Der dielektrische Spiegel weist nach der Weiterbildung des Patentanspruchs 7 wenigstens eine scharfe, gerade und glatte Kante auf, die sich im austretenden Licht der ersten Faser befindet.

Im Koppler befinden sich nach der Weiterbildung des Patentanspruchs 8 die ersten Enden der zweiten lichtführenden Fasern nebeneinander. Das dem freien Ende gegenüberliegende Ende der ersten Faser ist weiterhin an den ersten Enden der zweiten Fasern angeordnet, so dass das Ende der ersten Faser die Enden der zweiten Fasern überlappt. Darüber hinaus sind das zweite Ende einer zweiten Faser an die Lichtquelle und das zweite Ende der anderen zweiten Faser an den Detektor gekoppelt. Das ist eine einfache Realisierung eines Kopplers, wobei Licht von der Lichtquelle zur Faser und durch Reflexion am dielektrischen Spiegel von dieser zum Detektor gelangt.

Der freie Endenbereich der ersten Faser ist nach der Weiterbildung des Patentanspruchs 9 ein schwingungsfähiges Gebilde. Die Resonanzfrequenz des Gebildes ist durch die Länge, den Durchmesser und den Elastizitätsmodul des freien Endenbereich der ersten Faser bestimmt, so dass eine äußere den faseroptischen Schwingungs- und Beschleunigungssensor angreifende Schwingung den freien Endenbereich der ersten Faser zu Schwingungen mit der gleichen Frequenz erregt, wobei die Amplitude der Schwingung in einem Frequenzbereich kleiner der Resonanzfrequenz des Gebildes relativ konstant und proportional zur Stärke der Erregung ist und in der Nähe der Resonanzfrequenz stark ansteigt.

Das zweite Befestigungsmittel weist nach der Weiterbildung des Patentanspruchs 10 wenigstens ein Führungselement für den dielektrischen Spiegel auf, so dass der dielektrische Spiegel gegenüber dem Ende der ersten Faser geführt bewegbar und nach Positionierung befestigbar ist. Dazu kann das Führungselement vorteilhafterweise eine Schiene oder eine Nut besitzen. Die Nut kann dabei einen Endenbereich des dielektrischen Spiegels aufnehmen.

Die freien Endenbereiche von ersten Fasern sind nach der Weiterbildung des Patentanspruchs 11 beabstandet zu dem dielektrischen Spiegel angeordnet, wobei die Abstände der Enden der ersten Fasern zur Kante des dielektrischen Spiegels unterschiedlich sind. Weiterhin sind die ersten Fasern über wenigstens einen Koppler, lichtführenden Fasern mit mindestens einem Detektor und wenigstens der Lichtquelle oder jeweils einer Lichtquelle verbunden.

Die freien Endenbereiche von ersten Fasern sind nach einem nicht von der beanspruchten Erfindung erfassten Beispiel parallel zueinander und beabstandet zu dem dielektrischen Spiegel angeordnet, wobei die Enden der ersten Fasern auf eine Kante des dielektrischen Spiegels weisen. Darüber hinaus sind die ersten Fasern über wenigstens einen Koppler, lichtführenden Fasern mit mindestens einem Detektor und wenigstens der Lichtquelle oder jeweils einer Lichtquelle verbunden. Mit diesem einfachen Aufbau lassen sich die unterschiedlichsten Kombinationen für die verschiedensten Anwendungen realisieren.

Die freien Endenbereiche von ersten Fasern sind nach dem Patentanspruch 1 beabstandet zu dem dielektrischen Spiegel angeordnet. Die Enden der ersten Fasern weisen auf zwei winklig zueinander angeordnete Kanten des dielektrischen Spiegels. Die ersten Fasern sind jeweils über einen Koppler, lichtführenden Fasern mit einem Detektor und wenigstens der Lichtquelle oder jeweils einer Lichtquelle verbunden. Der faseroptische Schwingungs- und Beschleunigungssensors arbeitet in zwei Achsen. Weiterhin sind die ersten Fasern über wenigstens einen Koppler, lichtführenden Fasern mit mindestens einem Detektor und wenigstens der Lichtquelle oder jeweils einer Lichtquelle verbunden.

Es zeigen:
- Fig. 1: ein faseroptischer Schwingungs- und Beschleunigungssensor,
- Fig. 2: ein Diagramm mit einer Abhängigkeit von Amplitude als Funktion der Frequenz,
- Fig. 3: eine Anordnung einer ersten Glasfaser und eines dielektrischen Spiegels,
- Fig. 4: parallel zueinander angeordnete Endenbereiche zweier ersten Glasfasern mit einem dielektrischen Spiegel, einem Koppler, einer Lichtquelle, einem Detektor und einer Steuereinrichtung,
- Fig. 5: einen dielektrischen Spiegel mit zwei parallelen Lichtflecken hervorgerufen durch zwei erste Glasfasern,
- Fig. 6: einen dielektrischen Spiegel mit zwei über Eck angeordneten Lichtflecken hervorgerufen durch zwei erste Glasfasern und
- Fig. 7: parallel zueinander angeordnete Endenbereiche zweier ersten Glasfasern mit einem dielektrischen Spiegel, Kopplern, Lichtquellen, Detektoren und einer Steuereinrichtung.

Ein faseroptischer Schwingungs- und Beschleunigungssensor besteht im Wesentlichen aus einem dielektrischen Spiegel 7, einer ersten Glasfaser 1 als erste Faser, einem Koppler 3, einer Lichtquelle 5, einem Detektor 8 und zweiten Fasern als eine zweite Glasfaser 4 und eine dritte Glasfaser 9.

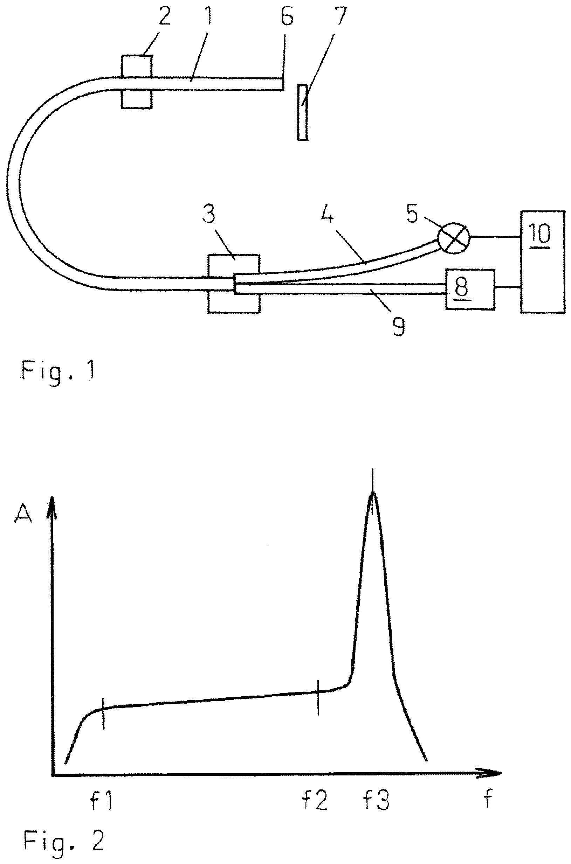

Die Fig. 1 zeigt einen faseroptischen Schwingungs- und Beschleunigungssensor in einer prinzipiellen Darstellung.

Die erste Glasfaser 1 selbst wird als schwingungssensibles Element verwendet, die dazu einseitig eingespannt und gegen den dielektrischen Spiegel 7 gerichtet ist. Der Abstand zwischen der ersten Glasfaser 1 und dielektrischem Spiegel 7 sowie dessen Kante bestimmen die Empfindlichkeit und die Richtungsorientierung des faseroptischen Schwingungs- und Beschleunigungssensors.

Die erste Glasfaser 1 ist dazu einseitig über eine Klemmung oder Klebung in einem ersten Befestigungsmittel 2 eingespannt und über den Koppler 3 vermittels der zweiten Glasfaser 4 mit einer Lichtquelle 5 verbunden. Das erste Befestigungsmittel 2 kann dazu ein Körper 2 mit einer Bohrung oder Vertiefung zur Aufnahme eines Bereichs der ersten Glasfaser 1 sein. Licht aus der Lichtquelle 5, die vorzugsweise eine Lumineszenzdiode ist, koppelt über die zweite Glasfaser 4 und den Koppler 3 in die erste Glasfaser 4 ein und tritt am Ende 6 mit einem Öffnungswinkel von etwa 20 Grad aus. Dieser Öffnungswinkel entspricht der numerischen Apertur der ersten Glasfaser 1 und ist je nach Fasertyp wählbar. Das vom dielektrischen Spiegel 7 reflektierte Licht koppelt in die erste Glasfaser 1 ein und gelangt über den Koppler 3 und die dritte Glasfaser 9 zum Detektor 8, der daraus eine äquivalente elektrische Spannung generiert. Dazu sind im Koppler 3 die ersten Enden der zweiten Glasfaser 4 und der dritten Glasfaser 9 nebeneinander angeordnet. Das dem freien Ende gegenüberliegende Ende der ersten Glasfaser 1 befindet sich an den ersten Enden der zweiten Glasfaser 4 und der dritten Glasfaser 9 so, dass das Ende der ersten Glasfaser 1 die Enden der zweiten Glasfaser 4 und der dritten Glasfaser 9 überlappt.

Die Lichtquelle 5 und der Detektor 8 sind mit einer Steuereinrichtung 10 verbunden. Letzteres kann ein Mikrocomputer sein.

Die Fig. 2 zeigt ein Diagramm mit einer Abhängigkeit von Amplitude als Funktion der Frequenz in einer prinzipiellen Darstellung.

Die einseitig eingespannte erste Glasfaser 1 ist ein schwingungsfähiges Gebilde, dessen Resonanzfrequenz durch die Länge, den Durchmesser und den Elastizitätsmodul bestimmt ist.

Eine äußere Kraft/Beschleunigung mit der Frequenz f erregt die erste Glasfaser 1 zu Schwingungen mit dieser Frequenz f. Die Amplitude A der Schwingung ist zwischen den Frequenzen f1 und f2 relativ konstant und proportional zur Stärke der Erregung und steigt in der Nähe der Resonanzfrequenz f3 drastisch an.

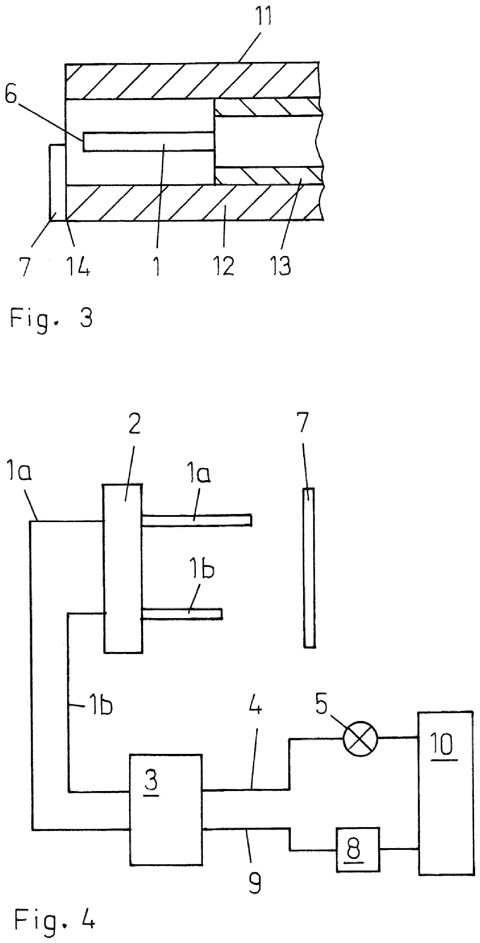

Die Fig. 3 zeigt eine Anordnung einer ersten Glasfaser 1 und eines dielektrischen Spiegels 7 in einer prinzipiellen Darstellung.

Gegenüber dem Ende 6 der ersten Glasfaser 1 ist beabstandet der dielektrische Spiegel 7 angeordnet. Dieser verfügt über eine scharfe und glatte Kante. Der dielektrische Spiegel 7 ist mechanisch mit der Klemmung/Klebung der ersten Glasfaser 1 verbunden. Das kann, wie in der Fig. 3 beispielhaft gezeigt, ein Rohrstück 12 als ein zweites Befestigungsmittel 11 sein. Das erste Befestigungsmittel 2 für die erste Glasfaser 1 und das zweite Befestigungsmittel 11 für den dielektrischen Spiegel 7 sind als Hülse 13 im Rohrstück 12 und als das Rohrstück 12 selbst miteinander verbunden. Die Hülse 13 befindet sich dabei im Rohrstück 12. Weiterhin ist der dielektrische Spiegel 7 an der der Hülse 13 gegenüberliegenden Querschnittsfläche und damit einer Kante 14 des Rohrstückes 12 angeordnet.

Der Spiegel wird nun wie folgt justiert und fixiert:
Bedeckt der Spiegel 7 vollständig den Aperturkegel der ersten Glasfaser 1, wird ein maximaler Anteil des Lichtes in die erste Glasfaser 1 zurück reflektiert und gelangt über den Koppler 3 und die dritte Glasfaser 9 auf den Detektor 8 und generiert eine elektrische Spannung am Detektor 8. Der dielektrische Spiegel 7 mit der scharfen Kante wird nun so justiert und fixiert, das die Ausgangsspannung des Detektors 8 50 % der Spannung bei vollständiger Bedeckung des Aperturkegels beträgt. Die scharfe Kante des dielektrischen Spiegels 7 ist dabei senkrecht zum Schwerefeld der Erde orientiert. Bei der Justage zeigt die scharfe Kante in Richtung Schwerefeld der Erde.

Wird das Rohrstück 12 nun parallel zur Achse der ersten Glasfaser 1 um +90° oder -90° gedreht, biegt sich die erste Glasfaser 1 durch ihr Eigengewicht durch und ändert die Koppelverhältnisse zwischen dielektrischen Spiegel 7 mit scharfer Kante und erster Glasfaser 1. Die daraus resultierende Spannungsdifferenz entspricht der einfachen Erdanziehung von 9,81 m/s² und gestattet somit eine problemlose Eichung.

Wird die erste Glasfaser 1 nun durch mechanische Schwingungen erregt, schwingt diese ebenfalls mit der Frequenz und in Richtung der Anregung. Bewegungen der ersten Glasfaser 1 und deren Ende 6 parallel zur scharfen Kante des dielektrischen Spiegels 7 erzeugen keine Änderung der Lichtintensität auf dem Detektor 8, während Bewegungen senkrecht zur scharfen Kante des dielektrischen Spiegels 7 Spannungsänderungen proportional zur Erdbeschleunigung erzeugen.

Der Sensor ist also richtungsselektiv und unempfindlich gegen elektromagnetische Felder.

Anstelle des Rohrstückes 12 als Befestigungsmittel kann auch ein U-förmiges Konstruktionselement als Befestigungsmittel eingesetzt werden. Die Schenkel sind dabei das erste Befestigungsmittel 2 für die erste Glasfaser 1 und das zweite Befestigungsmittel 11 für den dielektrischen Spiegel 7.

Das zweite Befestigungsmittel 11 kann wenigstens ein Führungselement für den dielektrischen Spiegel 7 aufweisen, so dass dieser gegenüber dem Ende der ersten Glasfaser 1 geführt bewegbar und nach Positionierung befestigbar ist. Das können natürlich auch zwei beabstandet zueinander angeordnete Führungselemente sein, so dass der dielektrische Spiegel 7 dazwischen geführt bewegbar ist. Nach der Positionierung kann der dielektrische Spiegel 7 einfach im Führungselement/in den Führungselementen festgeklebt werden.

Die Fig. 4 zeigt parallel zueinander angeordnete Endenbereiche zweier ersten Glasfasern 1a, 1b mit einem dielektrischen Spiegel 7, einem Koppler 3, einer Lichtquelle 5, einem Detektor 8 und einer Steuereinrichtung 10 in einer prinzipiellen Darstellung.

In einer ersten Ausführungsform sind bei einem faseroptischen Schwingungs- und Beschleunigungssensor die freien Endenbereiche von zwei ersten Glasfasern 1a, 1b beabstandet zu dem dielektrischen Spiegel 7 angeordnet. Die Abstände der Enden der ersten Glasfasern 1a, 1b zur Kante des dielektrischen Spiegels 7 sind gleich oder unterschiedlich.

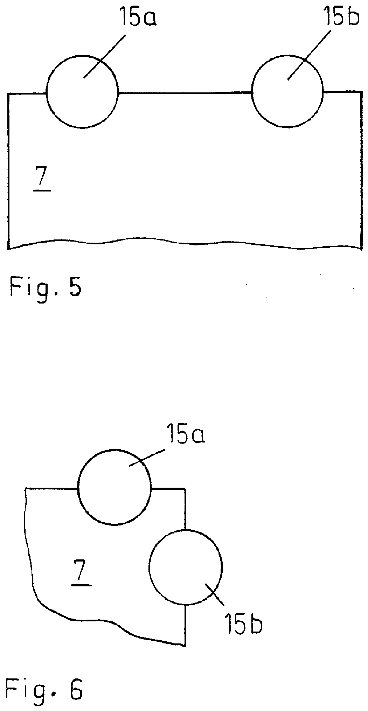

Fig. 5 zeigt einen dielektrischen Spiegel 7 mit zwei parallelen Lichtflecken 15a, 15b hervorgerufen durch zwei erste Glasfasern 1a, 1b in einer prinzipiellen Darstellung.

Die freien Endenbereiche der ersten Glasfasern 1a, 1b können dabei parallel zueinander und beabstandet zu dem dielektrischen Spiegel 7 angeordnet sein, so dass die Enden der ersten Glasfasern 1a, 1b auf eine Kante des dielektrischen Spiegels 7 weisen.

Die Fig. 6 zeigt einen dielektrischen Spiegel 7 mit zwei Lichtflecken 15a, 15b hervorgerufen durch zwei erste Glasfasern 1a, 1b in einer prinzipiellen Darstellung.

In einer zweiten Ausführungsform sind bei einem faseroptischen Schwingungs- und Beschleunigungssensors die freien Endenbereiche von ersten Glasfasern 1a, 1b beabstandet zu dem dielektrischen Spiegel 7 angeordnet. Die Enden der ersten Glasfasern 1a, 1b weisen auf zwei winklig zueinander angeordnete Kanten des dielektrischen Spiegels 7. Die Fig. 6 zeigt dazu die Lichtflecken 15a, 15b aus den ersten Glasfasern 1a, 1b. Die Abstände der Enden der ersten Glasfasern 1a, 1b zum dielektrischen Spiegel können dabei gleich oder unterschiedlich sein. Damit kann eine zweiachsig wirkende Schwingung oder Beschleunigung gemessen werden.

In einer ersten Variante können die ersten Glasfasern 1a, 1b der ersten und der zweiten Ausführungsform über jeweils einen Koppler 3, lichtführende Fasern als zweite Glasfasern 4, 9 mit mindestens einem Detektor 8 und wenigstens der Lichtquelle 5 oder jeweils einer Lichtquelle 5 verbunden sein.

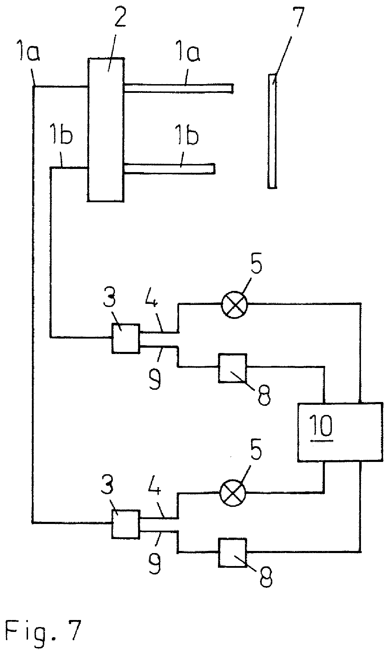

Die Fig. 7 zeigt parallel zueinander angeordnete Endenbereiche zweier ersten Glasfasern 1a, 1b mit einem dielektrischen Spiegel 7, Kopplern 3, Lichtquellen 5, Detektoren 8 und einer Steuereinrichtung 10 in einer prinzipiellen Darstellung.

In einer zweiten Variante können die ersten Glasfasern 1a, 1b der ersten und der zweiten Ausführungsform jeweils über einen Koppler 3 oder einen Mischer, lichtführende Fasern als zweite Glasfasern 4, 9 mit mindestens einem Detektor 8 und einer Lichtquelle 5 verbunden sein. Die Detektoren 8 und die Lichtquellen 5 der ersten Glasfasern 1a, 1b sind mit der Steuereinrichtung 10 verbunden. Die Lichtquellen 5 können auch getaktet betrieben werden, so dass eine der jeweiligen ersten Glasfaser 1 zuordenbare Reflexion am dielektrischen Spiegel 7 zuordenbar ist. Das kann damit auch mittels Lichtquellen 5 unterschiedlicher Wellenlänge erfolgen.

In weiteren Varianten können mehrere erste Glasfasern 1 jeweils über einen Koppler 3 oder einen Mischer, lichtführende Fasern als zweite Glasfasern 4, 9 mit mindestens einem Detektor 8 und einer Lichtquelle 5 verbunden sein. Die Detektoren 8 und die Lichtquellen 5 der ersten Glasfasern 1 sind mit der Steuereinrichtung 10 verbunden. Dazu sind winklig zueinander angeordnete dielektrische Spiegel 7 angeordnet. So können die dielektrischen Spiegel 7 im Querschnitt eine L-, T-, U- oder O-Form bilden. Damit können auch Messungen in drei Achsen erfolgen. Die Lichtquellen 5 können auch hierbei getaktet betrieben werden, so dass eine der jeweiligen ersten Glasfaser 1 zuordenbare Reflexion an den dielektrischen Spiegeln 7 zuordenbar ist. Das kann damit auch mittels Lichtquellen 5 unterschiedlicher Wellenlänge erfolgen.

### Bezugszeichenliste

- 1: erste Glasfaser
- 2: erstes Befestigungsmittel
- 3: Koppler
- 4: zweite Glasfaser
- 5: Lichtquelle
- 6: Ende der ersten Glasfaser
- 7: Spiegel
- 8: Detektor
- 9: dritte Glasfaser
- 10: Steuereinrichtung
- 11: zweites Befestigungsmittel
- 12: Rohrstück
- 13: Hülse
- 14: Kante
- 15: Lichtfleck

## Patentansprüche

1. Faseroptischer Schwingungs- und Beschleunigungssensor mit einem dielektrischen Spiegel (7), Kopplern (3), ersten jeweils mit einem der Koppler (3) verbundenen lichtführenden Fasern (1a, 1b), zweiten lichtführenden Fasern (4, 9), wenigstens einer Lichtquelle (5) und mindestens einem aus einfallendem Licht eine Spannung generierenden Detektor (8), wobei die Koppler (3) weiterhin über die zweiten lichtführenden Fasern (4, 9) mit der wenigstens einen Lichtquelle (5) und dem mindestens einen aus einfallendem Licht eine Spannung generierenden Detektor (8) verbunden sind, wobei freie Endenbereiche der ersten Fasern (1a, 1b) beabstandet zu dem dielektrischen Spiegel (7) so angeordnet sind, dass die Enden der ersten Fasern (1a, 1b) auf zwei winklig zueinander angeordnete Kanten des dielektrischen Spiegels (7) weisen, so dass sich die Kanten des dielektrischen Spiegels (7) im austretenden Licht der ersten Fasern (1a, 1b) befinden, und im nicht angeregten Zustand die aus dem auf die Enden der ersten Fasern (1a, 1b) einfallenden Lichts generierte Spannungen des Detektors (8) kleiner als die Spannungen sind, die bei vollständiger Bedeckung des Aperturkegels der ersten Fasern (1a, 1b) durch den dielektrischen Spiegel (7) und damit maximaler Reflexion mit dem Detektor (8) bei einer Beschleunigung generiert werden und diese Spannungen Maße des faseroptischen Schwingungs- und Beschleunigungssensors sind.

2. Faseroptischer Schwingungs- und Beschleunigungssensor nach Patentanspruch 1, **dadurch gekennzeichnet, dass** ein erstes Befestigungsmittel (2) für die ersten Fasern (1a, 1b) und ein zweites Befestigungsmittel (11) für den dielektrischen Spiegel (7) miteinander verbunden sind.

3. Faseroptischer Schwingungs- und Beschleunigungssensor nach Patentanspruch 2, **dadurch gekennzeichnet, dass** das erste Befestigungsmittel (2) eine Hülse (13) in einem Rohrstück (12) ist und dass sich der dielektrische Spiegel (7) an der der Hülse (13) gegenüberliegenden Querschnittsfläche des Rohrstückes (12) befindet, sodass das Rohrstück (12) ein Befestigungsmittel der Hülse (13) und das zweite Befestigungsmittel (11) ist.

4. Faseroptischer Schwingungs- und Beschleunigungssensor nach Patentanspruch 2, **dadurch gekennzeichnet, dass** die ersten Fasern (1a, 1b) und der dielektrische Spiegel (7) durch Klebungen und/oder Klemmungen mit den Befestigungsmitteln (2, 11) verbunden sind.

5. Faseroptischer Schwingungs- und Beschleunigungssensor nach Patentanspruch 1, **dadurch gekennzeichnet, dass** die bei vollständiger Bedeckung des Aperturkegels der ersten Fasern (1a, 1b) durch den dielektrischen Spiegel (7) und damit maximaler Reflexion mit dem Detektor (8) generierte Spannungen erste Spannungen und die im nicht angeregten Zustand die aus dem auf das Ende der ersten Fasern (1a, 1b) einfallenden Lichts generierte Spannungen des Detektors (8) zweite Spannungen sind.

6. Faseroptischer Schwingungs- und Beschleunigungssensor nach Patentanspruch 5, **dadurch gekennzeichnet, dass** jeweils die zweite Spannung 50% der ersten Spannung ist.

7. Faseroptischer Schwingungs- und Beschleunigungssensor nach Patentanspruch 1, **dadurch gekennzeichnet, dass** der dielektrische Spiegel (7) scharfe, gerade und glatte Kanten aufweist, die sich im austretenden Licht der ersten Fasern (1a, 1b) befinden.

8. Faseroptischer Schwingungs- und Beschleunigungssensor nach Patentanspruch 1, **dadurch gekennzeichnet, dass** sich im Koppler (3) die ersten Enden der zweiten lichtführenden Fasern (4, 9) nebeneinander befinden, dass das dem freien Ende (6) gegenüberliegende Ende der ersten Fasern (1a, 1b) an den ersten Enden der zweiten Fasern (4, 9) angeordnet ist, so dass das Ende der ersten Fasern (1a, 1b) die Enden der zweiten Fasern (4, 9) überlappt, und dass das zweite Ende einer zweiten Faser (4) an die Lichtquelle (5) und das zweite Ende der anderen zweiten Faser (9) an den Detektor (8) gekoppelt sind.

9. Faseroptischer Schwingungs- und Beschleunigungssensor nach Patentanspruch 1, **dadurch gekennzeichnet, dass** der freie Endenbereich der ersten Fasern (1a, 1b) ein schwingungsfähiges Gebilde ist, dass die Resonanzfrequenz des Gebildes durch die Länge, den Durchmesser und den Elastizitätsmodul des freien Endbereichs der ersten Fasern (1) bestimmt ist, so dass eine äußere den faseroptischen Schwingungs- und Beschleunigungssensor angreifende Schwingung den freien Endenbereich der ersten Fasern (1a, 1b) zu Schwingungen mit der gleichen Frequenz erregt, wobei die Amplitude der Schwingung in einem Frequenzbereich kleiner der Resonanzfrequenz des Gebildes relativ konstant und proportional zur Stärke der Erregung ist und in der Nähe der Resonanzfrequenz stark ansteigt.

10. Faseroptischer Schwingungs- und Beschleunigungssensor nach nach Patentanspruch 2, **dadurch gekennzeichnet, dass** das zweite Befestigungsmittel (11) wenigstens ein Führungselement für den dielektrischen Spiegel (7) aufweist, so dass der dielektrische Spiegel (7) gegenüber dem Ende der ersten Fasern (1a, 1b) geführt bewegbar und nach Positionierung befestigbar ist.

11. Faseroptischer Schwingungs- und Beschleunigungssensor nach Patentanspruch 1, **dadurch gekennzeichnet, dass** die freien Endenbereiche der ersten Fasern (1a, 1b) beabstandet zu dem dielektrischen Spiegel (7) angeordnet sind, wobei die Abstände der Enden der ersten Fasern (1a, 1b) zur Kante des dielektrischen Spiegels (7) unterschiedlich sind, und dass die ersten Fasern (1a, 1b) über die Koppler (3) und die lichtführenden Fasern (4, 9) mit dem mindestens einen Detektor (8) und wenigstens der Lichtquelle (5) oder jeweils einer Lichtquelle (5) verbunden sind.

## Claims

1. Fiber optic vibration and acceleration sensor with a dielectric mirror (7), couplers (3), first light-guiding fibers (1a, 1b) each connected to one of the couplers (3), second light-guiding fibers (4, 9), at least one light source (5) and at least one detector (8) generating a voltage from incident light, wherein the couplers (3) furthermore are connected via the second light-guiding fibers (4, 9) with the at least one light source (5) and the at least one from incident light voltage-generating detector (8), wherein free end areas of the first fibers (1a, 1b) are spaced apart from the dielectric mirror (7) so that the ends of the first fibers (1a, 1b) point to two edges of the dielectric mirror arranged at an angle to each other, so that the edges of the dielectric mirror (7) are in the light emanating from the first fibers (1a, 1b), and that in the non-excited state the detector voltages generated from the incident light on the ends of the first fibers (1a, 1b) are lower than the voltages, which, when the aperture cone of the first fibers (1a, 1b) is completely covered by the dielectric mirror (7), and thus with maximum reflection with the detector (8), are generated during an acceleration, and these voltages are measures of the fiber optic vibration and acceleration sensor.

2. Fiber-optic vibration and acceleration sensor according to claim 1, **characterized in that** a first fastening means (2) for the first fibers (1a, 1b) and a second fastening means (11) for the dielectric mirror (7) are connected to one another.

3. Fiber optic vibration and acceleration sensor according to claim 2, **characterized in that** the first fastening means (2) is a sleeve (13) in a pipe section (12) and that the dielectric mirror (7) is located on the cross-sectional area of the pipe section (12) opposite to the sleeve (13), so that the pipe piece (12) is a fastening means of the sleeve (13) and the second fastening means (11).

4. Fiber optic vibration and acceleration sensor according to claim 2 **characterized in that** the first fibers (1a, 1b) and the dielectric mirror (7) are connected to the fastening means (2, 11) by gluing and/or clamping.

5. Fiber optic vibration and acceleration sensor according to claim 1, **characterized in that** the voltages generated when the aperture cone of the first fibers (1a, 1b) is completely covered by the dielectric mirror (7) and thus maximum reflection the detector (8) generated voltages are first voltages and the voltages of the detector (8) generated from the light incident on the end of the first fibers (1a, 1b) in the non-excited state are second voltages.

6. Fiber optic vibration and acceleration sensor according to claim 5, **characterized in that** in each case the second voltage is 50% of the first voltage.

7. Fiber optic vibration and acceleration sensor according to claim 1, **characterized in that** the dielectric mirror (7) has sharp, straight and smooth edges which are located in the light emanating from the first fibers (1a, 1b).

8. Fiber optic vibration and acceleration sensor according to claim 1, **characterized in that** the first ends of the second light-guiding fibers (4, 9) are located next to one another in the coupler (3), that the end of the first fibers (1a, 1b) opposite to the free end (6) is arranged at the first ends of the second fibers (4, 9) so that the end of the first fibers (1a, 1b) overlaps the ends of the second fibers (4, 9), and that the second end of a second fiber (4) is coupled to the light source (5) and the second end of the other second fiber (9) is coupled to the detector (8).

9. Fiber optic vibration and acceleration sensor according to claim 1, **characterized in that** the free end area of the first fibers (1a, 1b) is an vibratory structure, that the resonance frequency of the structure is determined by the length, the diameter and the modulus of elasticity of the free end area of the first fiber (1), so that an outer vibration attacking the fiber optic vibration and acceleration sensor excites the free end region of the first fibers (1a, 1b) to vibrations at the same frequency, wherein the amplitude of the vibration in a frequency range less than the resonance frequency of the structure being relatively constant and proportional to the strength of the excitation and in the vicinity of the resonance frequency increases sharply.

10. Fiber-optic vibration and acceleration sensor according to claim 2, **characterized in that** the second fastening means (11) has at least one guide element for the dielectric mirror (7), so that the dielectric mirror (7) can be moved in a guided manner with respect to the end of the first fibers (1a, 1b) and can be fastened after positioning.

11. Fiber-optic vibration and acceleration sensor according to claim 1, **characterized in that** the free end portions of the first fibers (1a, 1b) are arranged at a distance from the dielectric mirror (7), wherein the distances of the ends of the first fibers (1a, 1b) from the edge of the dielectric mirror (7) being different, and that the first fibers (1a, 1b) are connected via the couplers (3) and the light-conducting fibers (4,9) to the at least one detector (8) and at least the light source (5) or a respective light source (5).

## Revendications

1. Capteur de vibrations et d'accélération à fibres optiques comprenant un miroir diélectrique (7), des coupleurs (3), des premières fibres porteuses de lumière (1a, 1b), chacune étant connectée à l'un desdits coupleurs (3), des secondes fibres porteuses de lumière (4, 9), au moins une source de lumière (5) et au moins un détecteur (8) générant une tension à partir de la lumière incidente, dans lequel les coupleurs (3) sont en outre reliés à la dite au moins une source de lumière (5) et au dit au moins un détecteur (8) générant une tension à partir de la lumière incidente par l'intermédiaire des secondes fibres (4, 9) conductrices de lumière, dans lequel les parties d'extrémité libres des premières fibres (1a, 1b) sont disposées à une distance du miroir diélectrique (7) de telle manière que les extrémités des premières fibres (1a, 1b) pointent vers deux bords du miroir diélectrique (7) disposés à un angle l'un par rapport à l'autre, de sorte que les bords du miroir diélectrique (7) sont situés dans la lumière sortante des premières fibres (1a, 1b) et, à l'état non excité, la lumière générée par la lumière incidente sur les extrémités des premières fibres (1a, 1b) sont plus petites que les tensions qui sont générées lorsque le cône d'ouverture des premières fibres (1a, 1b) est complètement recouvert par le miroir diélectrique (7) et qu'une réflexion maximale se produit donc avec le détecteur (8) lors d'une accélération, et ces tensions sont des mesures du capteur de vibration et d'accélération à fibres optiques.

2. Capteur de vibrations et d'accélération à fibres optiques selon la revendication 1, **caractérisé en ce qu'**un premier moyen de fixation (2) pour les premières fibres (1a, 1b) et un deuxième moyen de fixation (11) pour le miroir diélectrique (7) sont reliés entre eux.

3. Capteur de vibration et d'accélération à fibres optiques selon la revendication 2, **caractérisé en ce que** le premier moyen de montage (2) est un manchon (13) dans une pièce tubulaire (12) et **en ce que** le miroir diélectrique (7) est situé sur la surface de la section transversale de la pièce tubulaire (12) opposée au manchon (13), de sorte que le morceau de tube (12) est un moyen de fixation du manchon (13) et le second moyen de fixation (11).

4. Capteur de vibrations et d'accélération à fibres optiques selon la revendication 2 **caractérisé en ce que** les premières fibres (1a, 1b) et le miroir diélectrique (7) sont reliés aux moyens de fixation (2, 11) par collage et/ou serrage.

5. Capteur de vibration et d'accélération à fibres optiques selon la revendication 1, **caractérisé en ce que** le cône d'ouverture des premières fibres (1a, 1b) généré lorsque le miroir diélectrique (7) recouvre complètement le cône d'ouverture des premières fibres (1a, 1b), et donc la réflexion maximale ainsi générée par le détecteur (8) représentent les premières tensions du détecteur (8), et les tensions générées dans la zone non excitée du détecteur (8) générées par la lumière incidente sur l'extrémité des premières fibres (1a, 1b) sont les secondes tensions du détecteur (8).

6. Capteur de vibration et d'accélération à fibres optiques selon la revendication 5, **caractérisé en ce que**, dans chaque cas, la deuxième tension est égale à 50% de la première tension.

7. Capteur de vibrations et d'accélération à fibres optiques selon la revendication 1, **caractérisé en ce que** le miroir diélectrique (7) présente des bords nets, droits et lisses qui sont situés dans la lumière sortante des premières fibres (1a, 1b).

8. Capteur de vibrations et d'accélération à fibres optiques selon la revendication 1, **caractérisé en ce que** dans le coupleur (3), les premières extrémités des secondes fibres (4, 9) conductrices de lumière sont situées l'une à côté de l'autre, **en ce que** l'extrémité des premières fibres (1a, 1b) opposée à l'extrémité libre (6) est disposée aux premières extrémités des secondes fibres (4, 9) de sorte que l'extrémité des premières fibres (1a, 1b) chevauche les extrémités des secondes fibres (4, 9), et **en ce que** la seconde extrémité d'une seconde fibre (4) est reliée à la source de lumière (5) et la deuxième extrémité de l'autre seconde fibre (9) sont couplées au détecteur (8).

9. Capteur de vibration et d'accélération à fibres optiques selon la revendication 1, **caractérisé en ce que** la partie terminale libre des premières fibres (1a, 1b) est une structure oscillante, en ce sens que la fréquence de résonance de la structure est déterminée par la longueur, le diamètre et le module d'élasticité de la zone d'extrémité libre des premières fibres (1), de sorte qu'une oscillation externe agissant sur le capteur d'oscillation et d'accélération des fibres optiques peut être détectée, le capteur de vibration et d'accélération à fibres optiques excite la partie d'extrémité libre des premières fibres (1a, 1b) pour qu'elles vibrent à la même fréquence, dans lequel l'amplitude de la vibration est relativement constante et proportionnelle à la force de l'excitation dans une gamme de fréquences inférieure à la fréquence de résonance de la structure et augmente fortement au voisinage de la fréquence de résonance.

10. Capteur de vibration et d'accélération à fibres optiques selon la revendication 2, **caractérisé en ce que** le deuxième moyen de fixation (11) présente au moins un élément de guidage pour le miroir diélectrique (7), de sorte que le miroir diélectrique (7) peut être déplacé de manière guidée par rapport à l'extrémité des premières fibres (1a, 1b) et peut être fixé après positionnement.

11. Capteur de vibration et d'accélération à fibre optique selon la revendication 1, **caractérisé en ce que** les parties terminales libres des premières fibres (1a, 1b) sont disposées à distance du miroir diélectrique (7), les distances des extrémités des premières fibres (1a, 1b) par rapport au bord du miroir diélectrique (7) étant différentes, et **en ce que** les premières fibres (1a, 1b) sont reliées par les coupleurs (3) et les fibres conductrices de lumière (4,9) sont connectés à au moins un détecteur (8) et au moins la source lumineuse (5) ou une source lumineuse respective (5).
